# EUROPÄISCHE PATENTANMELDUNG

(11) **EP 2 053 331 A1**
(43) Veröffentlichungstag der Anmeldung: **29.04.2009**
(21) Anmeldenummer: 08017993.0
(22) Anmeldetag: 14.10.2008
(51) Int. Cl.: F25J 3/04

(54) **Verfahren und Vorrichtung zur Tieftemperatur-Luftzerlegung**

(30) Priorität: 25.10.2007 DE 102007051184; 06.12.2007 EP 07023682
(71) Anmelder: Linde Aktiengesellschaft, 80807 München (DE)
(72) Erfinder: Lochner, Stefan, 85567 Grafing (DE)
(74) Vertreter: Imhof, Dietmar

(57) **Zusammenfassung**

Das Verfahren und die Vorrichtung dienen zur Tieftemperatur-Luftzerlegung in einem Destilliersäulensystem zur Stickstoffgewinnung, das eine Einzelsäule (12) aufweist. Einsatzluft (8) wird in einem Hauptwärmetauscher (9) abgekühlt und in die Einzelsäule (12) eingeleitet (11, 43). Die Einzelsäule (12) weist einen Kopfkondensator (13) auf, in dem Dampf aus dem oberen Bereich der Einzelsäule mindestens teilweise kondensiert wird. Ein Stickstoff-Produktstrom (15, 16, 17) wird aus dem oberen Bereich der Einzelsäule (12) entnommen. Eine erste Restfraktion (14, 19) wird flüssig aus der Einzelsäule (12) entnommen, in dem Kopfkondensator (13) mindestens teilweise verdampft und anschließend als verdampfte erste Restfraktion (19) aus dem Kopfkondensator abgezogen. Ein erster Teil (20) der verdampften ersten Restfraktion (19) wird in einer Entspannungsmaschine (21) arbeitsleistend entspannt. Eine zweite Restfraktion (18, 29) wird aus dem unteren oder mittleren Bereich der Einzelsäule (12) entnommen, rückverdichtet (30) und anschließend mindestens zu einem ersten Teil wieder der Einzelsäule (12) zugeleitet (32). Ein zweiter Teil der verdampften ersten Restfraktion (19) wird nicht in die Entspannungsmaschine (21) eingeleitet, sondern als gasförmiges Unrein-Sauerstoffprodukt (60) unter etwa dem Eintrittsdruck der Entspannungsmaschine (21) abgezogen.

## Beschreibung

Die Erfindung betrifft ein Verfahren zur Tieftemperatur-Luftzerlegung mit einem Destilliersäulensystem zur Stickstoffgewinnung gemäß dem Oberbegriff des Patentanspruchs 1.

Verfahren und Vorrichtungen zur Tieftemperaturzerlegung von Luft sind zum Beispiel aus Hausen/Linde, Tieftemperaturtechnik, 2. Auflage 1985, Kapitel 4 (Seiten 281 bis 337) bekannt.

Beispiele für die im Obergriff beschriebene Art von Luftzerlegungsverfahren (SPECTRA) sind in EP 412793 B2, EP 773417 B1, EP 780648 B1, EP 807792 B1, EP 932004 A2 und US 2007204652 A1 beschrieben. Es ist bekannt, bei derartigen Prozessen eine erste sauerstoffangereicherte Restfraktion aus der Einzelsäule zu entnehmen, sie zu verdampfen und mindestens einen Teil der verdampften Restfraktion in einer Entspannungsmaschine arbeitsleistend zu entspannen, um die für den Ausgleich der Austauschverluste und gegebenenfalls für die Produktverflüssigung benötigte Kälte zu erzeugen. Die erste Restfraktion wird unter dem Austrittsdruck der Entspannungsmaschine abgegeben, also üblicherweise unter etwa Atmosphärendruck, und kann dann im Allgemeinen nur noch als Regeneriergas für eine Adsorptionseinrichtung zur Reinigung der Einsatzluft genutzt werden. Bei SPECTRA-Verfahren wird eine zweite Restfraktion kann dabei gemeinsam mit der ersten Restfraktion aus der Einzelsäule abgezogen und mindestens teilweise verdampft; alternativ können die beiden Restfraktionen an verschiedenen Stellen der Einzelsäule entnommen und separat von einander verdampft werden, beispielsweise in verschiedenen Passagen des Kopfkondensators der Einzelsäule.

Der Erfindung liegt die Aufgabe zugrunde, ein Verfahren der eingangs genannten Art und eine entsprechende Vorrichtung anzugeben, die wirtschaftlich besonders günstig zu betreiben sind.

Diese Aufgabe wird durch die kennzeichnenden Merkmale des Patentanspruchs 1 gelöst.

Im Allgemeinen wird bei Verfahren gemäß dem Oberbegriff des Patentanspruchs 1 das gesamte sauerstoffangereicherte Restgas verwendet, entweder zur Kälteerzeugung durch arbeitsleistende Entspannung oder zur Rückführung in die Säule. Wird zusätzlich ein Sauerstoffprodukt benötigt, wurden bisher entweder aufwändigere Verfahren mit Doppelsäule eingesetzt oder der benötigte Sauerstoff flüssig angeliefert und extern verdampft. Im Rahmen der Erfindung wurde festgestellt, dass es dennoch günstig ist, gemäß der ersten Variante des erfindungsgemäßen Verfahrens nur ein Teil der ersten Restfraktion für die Kälteproduktion zu verwenden und den Rest oder einen Teil des Restes der ersten Fraktion direkt als gasförmiges Unrein-Sauerstoffprodukt abzuziehen, und zwar unter etwa dem Eintrittsdruck der Entspannungsmaschine, das heißt unter einem deutlich überatmosphärischen Druck von 3 bis 6 bar, vorzugsweise 3,5 bis 5,5 bar. Zwar erhöht sich dadurch die benötigte Menge an Einsatzluft etwas. Trotz des entsprechenden Mehrbedarfs an Verdichtungsenergie ist das erfindungsgemäße Verfahren günstiger als die bekannten Methoden, zusätzlich unreinen Sauerstoff als Produkt zu liefern. "Unter etwa dem Eintrittsdruck der Entspannungsmaschine" bedeutet hier, dass der Druck des gasförmigen Unrein-Sauerstoffprodukts beim Abzug aus dem Verfahren wegen den entsprechenden Leitungsverlusten nicht exakt gleich dem Eintrittsdruck der Entspannungsmaschine sein muss; dezidierte Maßnahmen zur Druckveränderung um mehr als 0,5 bar, beispielsweise die Entspannung in einer weiteren Entspannungsmaschine, sind jedoch ausgeschlossen.

In der zweiten Variante des erfindungsgemäßen Verfahrens wird der Rückverdichter für die zweite Restfraktion gleichzeitig als Produktverdichter für das gasförmige Unrein-Sauerstoffprodukt genutzt. Dieses kann damit unter einem vergleichsweise hohen Druck geliefert werden. "Abziehen als gasförmiges Unrein-Sauerstoffprodukt" bedeutet hier, dass der zweite Teil der zweiten Restfraktion in derselben Zusammensetzung, wie sie stromabwärts des Rückverdichtens herrscht, als Endprodukt aus dem Verfahren abgezogen wird, ohne dass er einem weiteren Trennungsschritt unterworfen wird.

Das gasförmige Unrein-Sauerstoffprodukt kann für jede Anwendung genutzt werden, die einen entsprechenden Druck erfordert, ohne dass ein Verdichter notwendig wäre, zum Beispiel als Oxidationsmittel bei einer chemischen Reaktion, etwa einer Verbrennung. Typischerweise wird dort ein Druck von 1,8 bara und höher benötigt. Bei der Nutzung unter einen noch höheren Druck spart man bei der Erfindung einen Teil des Aufwands für die Verdichtung ein im Vergleich zu dem drucklosen Restgas stromabwärts der Entspannungsmaschine.

Das unreine Sauerstoffprodukt kann bei der Erfindung beispielsweise zur Lieferung von 02-angereicherter Verbrennungsluft genutzt werden. Im Vergleich zum Einsatz von Luft bietet dies eine Reihe von Vorteilen. Der erhöhte Sauerstoffgehalt führt zu einer Erhöhung der Brennertemperatur. Da weniger Stickstoff miterwärmt und mitverdichtet werden muss, reduziert sich der Energieaufwand. Die Brennerleistung erhöht sich dadurch, dass mehr reaktionsfähiges Gemisch durch den Brenner strömen kann.

Vorzugsweise werden der erste und der zweite Teil der ersten Restfraktion in den Hauptwärmetauscher eingeleitet, wobei der erste Teil bei einer Zwischentemperatur aus dem Hauptwärmetauscher entnommen und der Entspannungsmaschine zugeleitet und der zweite Teil bei etwa Umgebungstemperatur angewärmt und als gasförmiges Unrein-Sauerstoffprodukt abgezogen wird.

Der "Hauptwärmetauscher" wird vorzugsweise durch einen einzigen Wärmetauscherblock gebildet. Bei größeren Anlagen kann es sinnvoll sein, den Hauptwärmetauscher durch mehrere hinsichtlich des Temperaturverlaufs parallel geschaltete Stränge zu realisieren, die durch voneinander getrennte Bauelemente gebildet werden. Grundsätzlich ist es möglich, dass der Hauptwärmetauscher beziehungsweise jeder dieser Stränge durch zwei oder mehr seriell verbundene Blöcke gebildet wird.

Die erste Restfraktion kann unmittelbar stromabwärts des Kopfkondensators in ihre beiden Teile verzweigt werden, welche dann getrennt voneinander in den Hauptwärmetauscher eingeleitet werden. Vorzugsweise werden jedoch beide Teile zumindest teilweise in derselben Passage des Hauptwärmetauschers angewärmt werden, indem der erste und der zweite Teil der ersten Restfraktion gemeinsam in den Hauptwärmetauscher eingeleitet werden.

Stromaufwärts der Rückverdichtung kann die zweite Restfraktion auf etwa Umgebungstemperatur angewärmt werden. Die Rückverdichtung wird in diesem Fall im Warmen vorgenommen. Die rückverdichtete zweite Restfraktion wird dann wieder auf etwa die Betriebstemperatur der Säule abgekühlt, bevor sie in die Einzelsäule eingeleitet wird. Die Anwärmung und Wiederabkühlung der zweiten Restfraktion kann im Hauptwärmetauscher oder in einem oder mehreren anderen Wärmetauschern vorgenommen werden.

In vielen Fällen ist es jedoch günstiger, wenn die Rückverdichtung der zweiten Restfraktion mittels eines Kaltverdichters vorgenommen wird. Dann braucht die zweite Restfraktion vor der Rückverdichtung nicht oder nur relativ geringfügig angewärmt zu werden. Unter "Kaltverdichter" wird hier ein Verdichter verstanden, der bei einer Eintrittstemperatur von weniger als 200 K, vorzugsweise weniger als 150 K, insbesondere zwischen 90 und 120 K betrieben wird.

Sowohl bei kalter als auch bei warmer Rückverdichtung kann die bei der arbeitsleistenden Entspannung erzeugte mechanische Energie mindestens teilweise zur Rückverdichtung der zweiten Restfraktion genutzt werden. Die Übertragung der mechanischen Energie auf den Rückverdichter erfolgt unmittelbar mechanisch, beispielsweise über eine gemeinsame Welle von Entspannungsmaschine und Rückverdichter. Insbesondere dann, wenn der Rückverdichter als Kaltverdichter ausgebildet ist, wird vorzugsweise nur ein Teil der von der Entspannungsmaschine erzeugten mechanischen Energie auf den Rückverdichter übertragen; der Rest geht an eine warme Bremseinrichtung, z. B. ein Bremsgebläse, ein Generator oder eine dissipative Bremse.

Im Rahmen der Erfindung kann zusätzlich reiner Sauerstoff gewonnen werden, indem ein sauerstoffhaltiger Strom der Einzelsäule an einer Zwischenstelle entnommen und einer Reinsauerstoffsäule zugeleitet wird und ein Reinsauerstoff-Produktstrom in flüssigem Zustand aus dem unteren Bereich der Reinsauerstoffsäule entnommen wird, der Reinsauerstoff-Produktstrom - gegebenenfalls nach Druckerhöhung im flüssigen Zustand in dem Hauptwärmetauscher gegen Einsatzluft verdampft und angewärmt und schließlich als gasförmiges Produkt gewonnen wird.

Diese Verfahrensweise wird auch als "Innenverdichtung" bezeichnet und wird als Alternative zur gasförmigen Produktverdichtung (Außenverdichtung) angewendet, wenn das gasförmige Produkt unter Druck gewonnen werden Ein entsprechendes Verfahren ist - ohne die erfindungsgemäße Gewinnung eines gasförmigen Unrein-Sauerstoffprodukts - in der älteren deutschen Patentanmeldung 102007024168 und den dazu korrespondierenden Anmeldungen im Einzelnen beschrieben. Alternativ oder zusätzlich kann der reine Sauerstoff auch als Flüssigprodukt abgegeben werden.

Der Begriff "Verdampfen" schließt hier eine Pseudo-Verdampfung unter überkritischem Druck ein. Der Druck, unter dem der Reinsauerstoff-Produktstrom in den Hauptwärmetauscher eingeleitet wird, kann also auch über dem kritischen Druck liegen, ebenso wie der Druck des Wärmeträgers, der gegen den Reinsauerstoff-Produktstrom (pseudo-)kondensiert wird.

Wenn der Sauerstoff vor Ort unter einem erhöhten Druck benötigt wird, der oberhalb des Betriebsdrucks der Reinsauerstoffsäule liegt, ist es günstig, wenn der Reinsauerstoff-Produktstrom in flüssigem Zustand auf einen erhöhten Druck gebracht wird. Dadurch kann im Rahmen der Erfindung ein warmer Sauerstoffverdichter entfallen oder zumindest relativ klein ausgeführt sein. Wird eine Abnahme mit stark schwankenden Mengen gefordert, kann der Sauerstoff unter höherem als Abgabedruck in einen Gasdruckbehälter gefördert werden, der als Puffer dient.

Es ist günstig, wenn die erste Restfraktion am Sumpf der Einzelsäule abgezogen wird.

Die erste und die zweite Restfraktion können grundsätzlich gemeinsam mit der zweiten aus der Einzelsäule abgezogen werden, zum Beispiel am Sumpf (siehe EP 412793 B2). In vielen Fällen ist es jedoch günstiger, wenn die zweite Restfraktion einen höheren Stickstoffgehalt als die erste Restfraktion aufweist. Dann wird die zweite Restfraktion von einer Zwischenstelle der Einzelsäule abgezogen, die oberhalb des Sumpfs angeordnet ist, insbesondere oberhalb der Stelle, an der die erste Restfraktion entnommen wird. Die beiden Restfraktionen werden dann getrennt im Kopfkondensator verdampft und der Rückverdichtung beziehungsweise der arbeitsleistenden Entspannung und der Produktentnahme zugeführt.

Außerdem betrifft die Erfindung eine Vorrichtung zur Tieftemperatur-Luftzerlegung gemäß Patentanspruch 9.

Die Erfindung sowie weitere Einzelheiten der Erfindung werden im Folgenden anhand zweier in der Zeichnung schematisch dargestellten Ausführungsbeispiele näher erläutert. Hierbei zeigen:
- Figur 1: ein Ausführungsbeispiel für eine erste Variante der Erfindung mit Abzug des gasförmigen Unrein-Sauerstoffprodukts stromaufwärts der Entspannungsmaschine und
- Figur 2: ein Ausführungsbeispiel für eine zweite Variante der Erfindung mit Abzug des gasförmigen Unrein-Sauerstoffprodukts stromabwärts der Rückverdichters.

Atmosphärische Luft 1 wird über ein Filter 2 von einem Luftverdichter angesaugt und dort auf einen Absolutdruck von 6 bis 20 bar, vorzugsweise etwa 9 bar verdichtet. Nach Durchströmen eines Nachkühlers 4 und eines Wasserabscheiders 5 wird die verdichtete Luft 6 in einer Reinigungsvorrichtung 7 gereinigt, die ein Paar von mit Adsorptionsmaterial, vorzugsweise Molekularsieb, gefüllten Behältern aufweist. Die gereinigte Luft 8 wird in einem Hauptwärmetauscher 9 auf etwa Taupunkt abgekühlt und teilweise verflüssigt. Ein erster Teil 11 der abgekühlten Luft 10 wird über ein Drosselventil 51 in eine Einzelsäule 12 eingeleitet. Die Einspeisung erfolgt vorzugsweise einige praktische oder theoretische Böden oberhalb des Sumpfs.

Der Betriebsdruck der Einzelsäule 12 (am Kopf) beträgt 6 bis 20 bar, vorzugsweise etwa 9 bar. Ihr Kopfkondensator wird mit einer zweiten Restfraktion 18 und einer ersten Restfraktion 14 gekühlt. Die erste Restfraktion 14 wird vom Sumpf der Einzelsäule 12 abgezogen, die zweite Restfraktion 18 von einer Zwischenstelle einige praktische oder theoretische Böden oberhalb der Luftzuspeisung oder auf gleicher Höhe wie diese.

Als Hauptprodukt der Einzelsäule 12 wird gasförmiger Stickstoff 15, 16 am Kopf abgezogen, im Hauptwärmetauscher 9 auf etwa Umgebungstemperatur angewärmt und schließlich über Leitung 17 als gasförmiges Druckprodukt (PGAN) abgezogen. Ein Teil 53 des Kondensats 52 aus dem Kopfkondensator 13 kann als Flüssigstickstoffprodukt (PLIN) gewonnen werden; der Rest 54 wird als Rücklauf auf den Kopf der Einzelsäule aufgegeben.

Die zweite Restfraktion 18 wird im Kopfkondensator 13 unter einem Druck von 2 bis 9 bar, vorzugsweise etwa 4 bar verdampft und strömt gasförmig über Leitung 29 zu einem Kaltverdichter 30, in dem sie auf etwa den Betriebsdruck der Einzelsäule rückverdichtet wird. Die rückverdichtete Restfraktion 31 wird im Hauptwärmetauscher 9 wieder auf Säulentemperatur abgekühlt und schließlich über Leitung 32 der Einzelsäule 12 am Sumpf wieder zugeführt.

Die erste Restfraktion 14 wird im Kopfkondensator 13 unter einem Druck von 2 bis 9 bar, vorzugsweise etwa 4 bar verdampft und strömt gasförmig über Leitung 19 zum kalten Ende des Hauptwärmetauschers 9. Bei einer Zwischentemperatur wird ein erster Teil 20 der ersten Restfraktion wieder entnommen (Leitung 20). Ein zweiter Teil verbleibt im Hauptwärmetauscher 9, wird dort weiter auf etwa Umgebungstemperatur angewärmt und verlässt über Leitung 60 die Anlage als gasförmiges Unrein-Sauerstoffprodukt (GOX-Imp.). Der erste Teil 20 der ersten Restfraktion wird in einer Entspannungsmaschine 21, die in dem Beispiel als Turboexpander ausgebildet ist, arbeitsleistend auf etwa 300 mbar über Atmosphärendruck entspannt. Die Entspannungsmaschine ist mechanisch gekoppelt mit dem Kaltverdichter 30 und einer Bremseinrichtung 22, die in dem Ausführungsbeispiel durch eine Ölbremse gebildet wird. Die entspannte erste Restfraktion 23 wird im Hauptwärmetauscher 9 auf etwa Umgebungstemperatur angewärmt. Die warme erste Restfraktion 24 wird in die Atmosphäre abgeblasen (Leitung 25) und/oder als Regeneriergas 26, 27 in der Reinigungsvorrichtung 7 eingesetzt, gegebenenfalls nach Erhitzung in der Heizeinrichtung 28.

Ein sauerstoffhaltiger Strom 36, der im Wesentlichen frei von schwererflüchtigen Verunreinigungen ist, wird von einer Zwischenstelle der Einzelsäule 12 in flüssigem Zustand abgezogen, die 5 bis 25 theoretische oder praktische Böden oberhalb der Luftzuspeisung angeordnet ist. Der sauerstoffhaltige Strom 36 wird gegebenenfalls in einem Sumpfverdampfer 37 einer Reinsauerstoffsäule 38 unterkühlt und über Leitung 39 und Drosselventil 40 auf den Kopf der Reinsauerstoffsäule 38 aufgegeben. Der Betriebsdruck der Reinsauerstoffsäule 38 (am Kopf) beträgt 1,3 bis 4 bar, vorzugsweise etwa 2,5 bar.

Der Sumpfverdampfer 37 der Reinsauerstoffsäule 38 wird außerdem mittels eines zweiten Teils 42 der abgekühlten Einsatzluft 10 gekühlt. Der Einsatzluftstrom 42 wird dabei mindestens teilweise, beispielsweise vollständig kondensiert und strömt über Leitung 43 zur Einzelsäule 12, wo er etwa auf Höhe der Zuspeisung der übrigen Einsatzluft 11 eingeleitet wird.

Vom Sumpf der Reinsauerstoffsäule 38 wird ein Reinsauerstoff-Produktstrom 41 in flüssigem Zustand entnommen, mittels einer Pumpe 55 auf einen erhöhten Druck von 2 bis 100 bar, vorzugsweise etwa 12 bar gebracht, über Leitung 56 zum kalten Ende des Hauptwärmetauschers 9 geführt, dort unter dem erhöhten Druck verdampft und auf etwa Umgebungstemperatur angewärmt und schließlich über Leitung 57 als gasförmiges Produkt (GOX-IC) gewonnen.

Das Kopfgas 58 der Reinsauerstoffsäule 38 wird der entspannten ersten Restfraktion 23 zugemischt. Über eine Bypassleitung 59 wird gegebenenfalls ein Teil der Einsatzluft zur Pumpverhütung des Kaltverdichters 30 zu dessen Eintritt geleitet (anti-surge control).

Bei Bedarf kann der Anlage stromaufwärts und/oder stromabwärts der Pumpe 55 ein flüssiger Sauerstoffs als Flüssigprodukt entnommen werden (in der Zeichnung nicht dargestellt). Zusätzlich kann eine externe Flüssigkeit, zum Beispiel flüssiges Argon, flüssiger Stickstoff oder flüssiger Sauerstoff aus einem Flüssigtank, in dem Hauptwärmetauscher 9 in indirektem Wärmeaustausch mit der Einsatzluft verdampft werden (in der Zeichnung nicht dargestellt).

Das erfindungsgemäße Verfahren und die entsprechende Vorrichtung können besonders günstig in der Halbleiterindustrie oder bei der pyrogenen Kieselsäureherstellung eingesetzt, die sowohl Stickstoff als auch unreinen Sauerstoff und gegebenenfalls reinen Sauerstoff als Produkte benötigen.

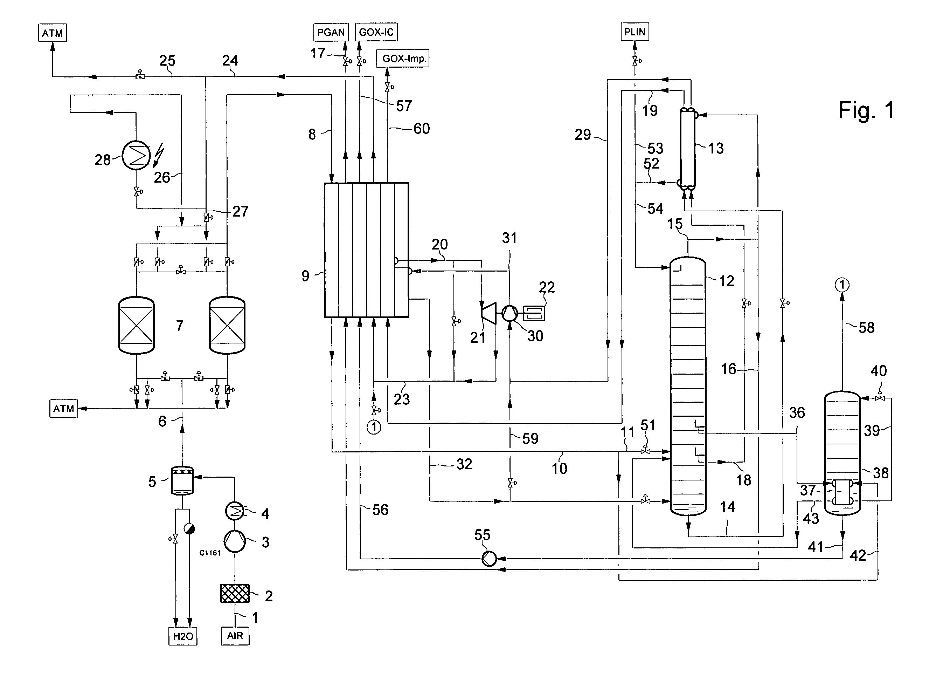

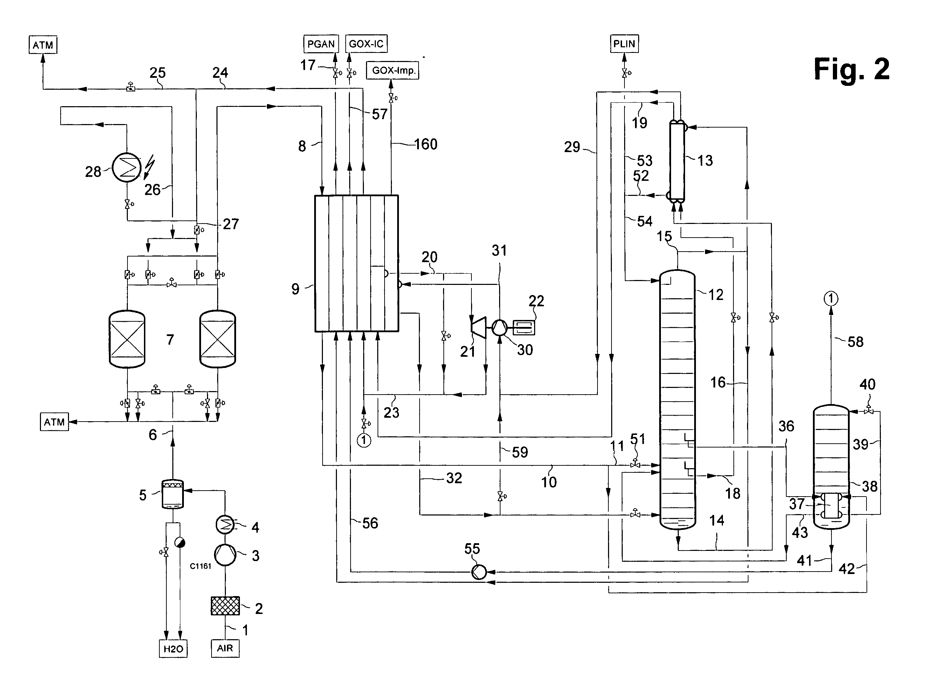

Figur 2 unterscheidet sich nur dadurch von Figur 1, dass hier das Figur 1 gasförmige Unrein-Sauerstoffprodukts nicht aus der ersten Restfraktion stromaufwärts der Entspannungsmaschine, sondern aus der zweiten Restfraktion 31 stromabwärts des Rückverdichters 30 abgezweigt wird. Nur ein erster Teil der rückverdichteten zweiten Restgasfraktion 31 wird im Hauptwärmetauscher 9 abgekühlt und über Leitung 32 zurück in die Säule geführt; der Rest strömt im Hauptwärmetauscher zum warmen Ende und wird dort als gasförmiges Unrein-Sauerstoffprodukt 160 abgezogen. Die erste Restfraktion 19/20 wird vollständig der Entspannungsmaschine 21 zugeführt.

Auch eine Kombination der beiden Varianten aus Figur 1 und 2 ist grundsätzlich möglich, also der Abzug zweier gasförmiger Unrein-Sauerstoffprodukte unter verschiedenen Drücken.

## Patentansprüche

1. Verfahren zur Tieftemperatur-Luftzerlegung in einem Destilliersäulensystem zur Stickstoffgewinnung, das eine Einzelsäule (12) aufweist, bei dem
- Einsatzluft (8) in einem Hauptwärmetauscher (9) abgekühlt und in die Einzelsäule (12) eingeleitet (11, 43) wird,
- die Einzelsäule (12) einen Kopfkondensator (13) aufweist, in dem Dampf aus dem oberen Bereich der Einzelsäule mindestens teilweise kondensiert wird,
- ein Stickstoff-Produktstrom (15, 16, 17) aus dem oberen Bereich der Einzelsäule (12) entnommen wird,
- eine erste Restfraktion (14, 19) flüssig aus der Einzelsäule (12) entnommen, in dem Kopfkondensator (13) mindestens teilweise verdampft und anschließend als verdampfte erste Restfraktion (19) aus dem Kopfkondensator abgezogen wird,
- mindestens ein erster Teil (20) der verdampften ersten Restfraktion (19) in einer Entspannungsmaschine (21) arbeitsleistend entspannt wird und
- eine zweite Restfraktion (18, 29) aus dem unteren oder mittleren Bereich der Einzelsäule (12) entnommen, rückverdichtet (30) und anschließend mindestens zu einem ersten Teil wieder der Einzelsäule (12) zugeleitet (32) wird,
**dadurch gekennzeichnet, dass**
- ein zweiter Teil der verdampften ersten Restfraktion (19) nicht in die Entspannungsmaschine (21) eingeleitet, sondern als gasförmiges Unrein-Sauerstoffprodukt (60) unter etwa dem Eintrittsdruck der Entspannungsmaschine (21) abgezogen wird und/oder
- ein zweiter Teil der zweiten Restfraktion stromabwärts des Rückverdichtens (30) als gasförmiges Unrein-Sauerstoffprodukt (160) abgezogen wird.

2. Verfahren nach Anspruch 1, **dadurch gekennzeichnet, dass** der erste und der zweite Teil der ersten Restfraktion in den Hauptwärmetauscher (9) eingeleitet werden, wobei der erste Teil (20) bei einer Zwischentemperatur aus dem Hauptwärmetauscher (9) entnommen und der Entspannungsmaschine (21) zugeleitet und der zweite Teil auf etwa Umgebungstemperatur angewärmt und als gasförmiges Unrein-Sauerstoffprodukt (60) abgezogen wird.

3. Verfahren nach Anspruch 2, **dadurch gekennzeichnet, dass** der erste und der zweite Teil der ersten Restfraktion gemeinsam in den Hauptwärmetauscher (9) eingeleitet (19) werden.

4. Verfahren nach einem der Ansprüche 1 bis 3, **dadurch gekennzeichnet, dass** die Rückverdichtung der zweiten Restfraktion (18, 29) mittels eines Kaltverdichters (30) vorgenommen wird.

5. Verfahren nach einem der Ansprüche 1 bis 4, **dadurch gekennzeichnet, dass** die bei der arbeitsleistenden Entspannung (21) erzeugte mechanische Energie mindestens teilweise zur Rückverdichtung (30) der zweiten Restfraktion genutzt wird.

6. Verfahren nach einem der Ansprüche 1 bis 5, **dadurch gekennzeichnet, dass**
- ein sauerstoffhaltiger Strom (36) der Einzelsäule (12) an einer Zwischenstelle entnommen und einer Reinsauerstoffsäule (38) zugeleitet (39) wird und
- ein Reinsauerstoff-Produktstrom (41) in flüssigem Zustand aus dem unteren Bereich der Reinsauerstoffsäule (38) entnommen wird,
- der Reinsauerstoff-Produktstrom (41, 56) - gegebenenfalls nach Druckerhöhung (55) im flüssigen Zustand in dem Hauptwärmetauscher (9) gegen Einsatzluft (8) verdampft und angewärmt
- und schließlich als gasförmiges Produkt (57) gewonnen wird.

7. Verfahren nach einem der Ansprüche 1 bis 6, **dadurch gekennzeichnet, dass** die erste Restfraktion (14) am Sumpf der Einzelsäule (12) abgezogen wird.

8. Verfahren nach einem der Ansprüche 1 bis 7, **dadurch gekennzeichnet, dass** die zweite Restfraktion (18) von einer Zwischenstelle der Einzelsäule (12) abgezogen, die oberhalb des Sumpfs angeordnet ist, insbesondere oberhalb der Stelle, an der die erste Restfraktion (14) entnommen wird.

9. Verfahren nach einem der Ansprüche 1 bis 9, **dadurch gekennzeichnet, dass** der Austrittsdruck der Entspannungsmaschine (21) weniger als 0,5 bar oberhalb des Atmosphärendrucks liegt.

10. Verfahren nach einem der Ansprüche 1 bis 9, **dadurch gekennzeichnet, dass** die zweite Restfraktion (18, 29) auf einen Druck rückverdichtet (30) wird, der weniger als 0,5 bar oberhalb des Betriebsdruck der Einzelsäule (12) liegt.

11. Vorrichtung zur Tieftemperatur-Luftzerlegung
- mit einem Destilliersäulensystem (12) zur Stickstoffgewinnung, das eine Einzelsäule (12) aufweist,
- mit einem Hauptwärmetauscher (9) zum Abkühlen von Einsatzluft (8) in
- mit Mitteln zum Einführen abgekühlter Einsatzluft in die Einzelsäule (12),
- mit einer Stickstoff-Produktleitung (15, 16, 17), die mit der Einzelsäule (12) verbunden ist,
- mit einem Kopfkondensator (13) zum Kondensieren von Dampf aus dem oberen Bereich der Einzelsäule,
- mit Mitteln zum Entnehmen einer ersten Restfraktion (14, 19) in flüssigem Zustand aus der Einzelsäule (12) und zum Einleiten der ersten Restfraktion in den Kopfkondensator,
- mit Mitteln zum Abziehen der mindestens teilweise verdampften ersten Restfraktion (19) aus dem Kopfkondensator (13),
- mit einer Turbinenleitung (20) zur Einleitung mindestens eines ersten Teils der verdampften ersten Restfraktion (19) in eine Entspannungsmaschine (21),
- mit Mitteln zum Entnehmen einer zweiten Restfraktion (18, 29) aus dem unteren oder mittleren Bereich der Einzelsäule (12),
- mit Mitteln zum Rückverdichten (30) der zweiten Restfraktion und
- mit Mitteln zum Rückführen mindestens eines ersten Teils der rückverdichteten zweiten Restfraktion in die Einzelsäule (12),
**gekennzeichnet durch** eine Unrein-Sauerstoffprodukt-Leitung (60, 160)
- zum Abziehen eines zweiten Teils der verdampften ersten Restfraktion (19) als gasförmiges Unrein-Sauerstoffprodukt unter etwa dem Eintrittsdruck der Entspannungsmaschine (21) und/oder
- zum Abziehen eines zweiten Teils der zweiten Restfraktion stromabwärts der Mittel zum Rückverdichten (30) als gasförmiges Unrein-Sauerstoffprodukt.
